# EUROPEAN PATENT APPLICATION

(11) **EP 1 074 663 A1**
(43) Date of publication of application: **07.02.2001**
(21) Application number: 99202581.7
(22) Date of filing: 06.08.1999
(51) Int. Cl.: E02D 27/42

(54) **A foundation for supporting a building structure, in particular for the foundation of a tower structure, a wind turbine or the like**

(71) Applicant: Carl Bro as, Snoghoj, 7000 Fredericia (DK); NCC Rasmussen & Schiotz Anlaeg as, 8260 Viby J (DK)
(72) Inventor: Nielsen, Ole Bigum, 8722 Hedensted (DK); Ikkala, Poul-Ivan, 5330 Munkebo (DK); Hartvig, Flemming, Ale, 7160 Torring (DK)
(74) Representative: Elmeros, Claus

(57) **Abstract**

The invention provides a foundation for supporting a tower-like building structure, in particular for the foundation of a wind turbine or the like, comprising a central portion (1) having supporting means (6) for receiving a tower-like building structure, wherein three or more stabilising members (2) are radially arranged around said central supporting section (1) of the foundation and where each of the stabilising members (2) are provided with ground anchoring means (3) at their peripheral end section. Hereby, a reduction of the manufacturing time is achieved just as it is found that a reduction of 50-70% can be achieved in the amount of material used in the foundation compared with the establishment of a traditional foundation. The extraction and work-up of raw materials, the construction and the transportation are considerably reduced resulting in a less environmentally damaging impact, not only by the use of less material but also less impact due to lower emissions of environmentally damaging substances, i.e. by the combustion of fuel etc. during transportation and manufacturing.

## Description

The present invention relates to a foundation for supporting a building structure, in particular for the foundation of a tower structure, a wind turbine or the like, comprising a central portion having supporting means for receiving an elongated building structure. The invention also relates to a method of supporting a tower structure, a wind turbine or the like.

Wind turbines and other building structures are erected on a subterranean foundation. A foundation for a tower structure, in particular for a wind turbine, is typically a reinforced concrete block that is dimensioned according to the size of the building construction to be supported. The tower is mounted on the centre of gravity of the foundation in order to ensure stability of the tower structure of e.g. a wind turbine in all directions.

Depending on size, the foundation can either be manufactured on a building site or on a separate construction site and then transported to the building site where the wind turbine tower is to be erected.

The design and the dimensions of the foundation depend on the weight and size of the wind turbine to be mounted on the foundation as well as the ground of the site. The foundation is therefore often dimensioned according to a specific wind turbine on a specific location.

The preparation of the foundations may have an environmentally damaging effect both from the manufacture but also in relation to the transportation since the sites for tower structures such as wind turbines are often remote and difficult to reach which is particularly true for the heavy transport equipment needed for transporting a foundation of such kind to the site and the equipment for installing the foundation correctly on the site.

On this basis, it is the object of the present invention to provide an improved foundation for wind turbines and similar tower-like structures that have a less environmentally damaging impact than the traditional foundations and more flexible in use, require less manufacturing time and are more inexpensive to manufacture.

This object is achieved by a foundation of the initially mentioned kind, wherein three or more stabilising members are radially arranged around the said central supporting section of the foundation and where each of the stabilising members are provided with ground anchoring means at their peripheral end section.

With a foundation for a wind turbine or other tower-like building structures, such as telecommunication towers or masts, chimneys, etc. mounted thereon, the forces from the tower structure can be transferred directly down into the ground by the anchoring means in contrast to the conventional individual foundations that are founded directly without anchoring means and are stabilised by the gravitation of the above lying ground.

Due to the geometrical shape of a foundation, according to the invention, where three or more members radiate from a central section located in the centre of gravity of the foundation, the natural stability of the geometrical form of the foundation is advantageously employed for directing the tilting forces or bending moments that might occur on the mounted building construction, i.e. the wind turbine or the like, absorbing these forces in the surrounding ground.

With such a foundation, according to the invention, a reduction of the manufacturing time is achieved just as a reduction of 50-70% can be achieved of the amount of material used for the foundation compared with the establishment of a traditional foundation. The extraction and work-up of raw materials, the construction and transportation are considerably reduced resulting in a less environmentally damaging impact, not only by the use of less materials but also less impact due to lower emissions of environmentally damaging substances, i.e. by the combustion of fuel etc. during transportation and manufacturing.

Moreover, the production time and the establishment of the foundation at the wind turbine site can be significantly reduced with a foundation, according to the invention.

In particular in relation to larger structures, the reduction of the amount of material and the reduction in production time result in a substantial reduction of the construction costs compared with the traditional gravitation foundations.

According to the preferred embodiment of the foundation, according to the invention, the stabilising members are equally spaced around the central section of the foundation. Moreover, the stabilising members are preferably of equal length. Hereby, a symmetry of the foundation is provided making the foundation particular easy both to manufacture and to place on the foundation site.

According to the preferred embodiment, the ground anchoring means comprise a substantively vertically orientated ground anchor rod and at least one angular disposed ground anchor rod, preferably extending downwards in the same direction as the accompanying stabilising member, and preferably beyond the end of the said stabilising member. Also, the length of the ground anchor rods can preferably be individually selected. This means that the same foundation, according to the invention, can be used irrespective of the ground on a particular site. Each ground anchor rod can be varied in length whereby the anchoring forces can be regulated according to the actual ground on the site.

The foundation can be produced in reinforced concrete. This means that a foundation with sufficient load capacity can be produced with particularly low material consumption up to 50-70 % less than traditional foundations for wind turbines.

The foundation could alternatively be produced in wood, aluminium, steel or a mixture of materials.

The invention also provides a method of supporting an elongated building structure, in particular a tower structure, a wind turbine or the like, where said elongated building structure is mounted on the centre of a subterranean foundation according to any of the previous claims, whereby the tilting forces applied to the building structure are absorbed by a plurality of radially extending stabilising members equally disposed around the central base of the foundation and protruding outwards from the central portion in a horizontal level from which the forces are transferred into the ground by anchoring means on the stabilising members.

In a preferred embodiment of said method, the foundation is also anchored to the ground by downwardly protruding anchoring rods at each of the stabilising members, where the length of the said anchoring rods have been individually selected according to the type of ground and the load to be mounted on the foundation.

The invention will be described in detail below with reference to the accompanying drawings in which
- Fig. 1: is a top view of a foundation, according to the preferred embodiment of the invention, and
- fig. 2: is a side view of the foundation.

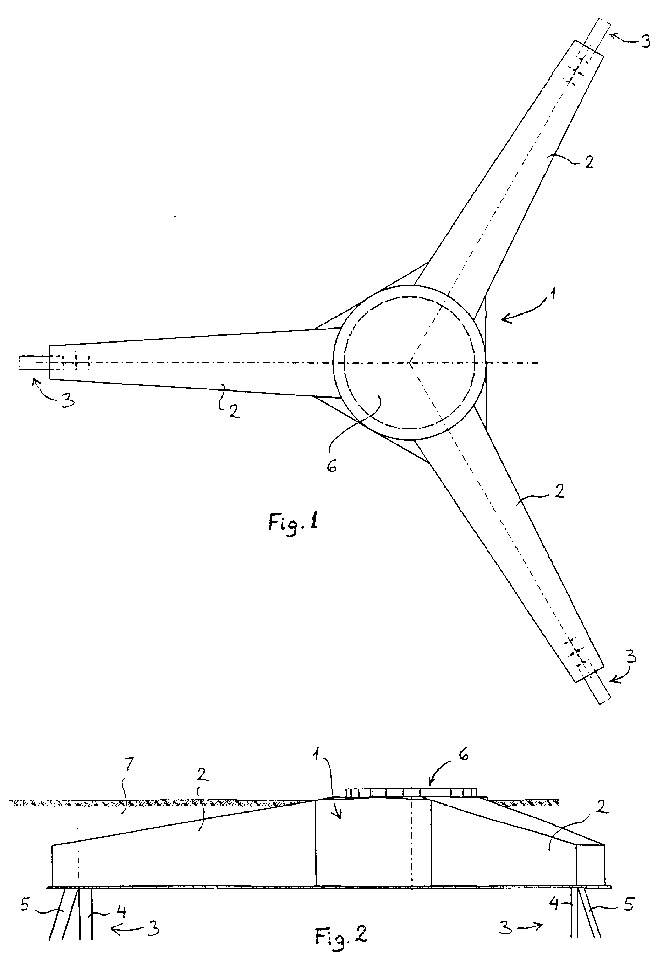

In figures 1 and 2, a preferred embodiment of the invention is shown. As shown in the top view of figure 1, the foundation has a central portion 1 with three radially extending stabilising members 2 or legs that are equally distributed around the central portion 1. On top of the central portion 1, a supporting platform 6 is provided for receiving the tower structure, the wind turbine or the like (not shown).

The foundation is almost submerged when located at the site, and it is only the top of the central portion 1, i.e. the supporting surface 6 that extends above ground 7.

At the end of each stabilising member, two downwardly extending ground anchoring means 3 are arranged. The ground anchoring means 3 are shown in detail in the side view of figure 2.

The ground anchoring means 3 at each end of the stabilising members 2 comprise downwardly extending ground anchoring rods 4, 5. The first rod 4 is vertically arranged and the second anchor rod 5 is arranged with an inclination. With the invention, it is realised that the amount of anchor rods 4, 5 of the ground anchoring means 3 can be chosen according to the actual need for absorption of retention forces into the ground 7.

## Claims

1. A foundation for supporting an elongated building structure, in particular for the foundation of a tower structure, a wind turbine or the like, comprising a central portion (1) having supporting means (6) for receiving an elongated building structure, **characterised in that** three or more stabilising members (2) are radially arranged around the said central supporting section (1) of the foundation and that each of the stabilising members (2) are provided with ground anchoring means (3) at their peripheral end section.

2. A foundation according to claim 1, wherein the stabilising members (2) are equally spaced around the central section of the foundation.

3. A foundation according to claim 1 or 2, wherein the stabilising members (2) are of equal length.

4. A foundation according to any of the claims 1 to 3, wherein the ground anchoring means (3) comprise a minimum of one substantively vertically orientated ground anchor rod (4) and at least one angular disposed ground anchor rod (5), preferably extending downwards in the radial direction similar to the accompanying stabilising member (2), and preferably beyond the end of said stabilising member (2).

5. A foundation according to claim 4, wherein the length of the ground anchor rods (4, 5) can be individually selected.

6. A foundation according to any of the previous claims, wherein the foundation is produced in reinforced concrete.

7. A foundation according to any of the previous claims, wherein the foundation is produced in wood, aluminium, steel or a mixture thereof.

8. A method of supporting a tower-like structure, in particular a wind turbine or the like, where the said tower-like building structure is mounted on the centre of a subterranean foundation according to any of the previous claims, whereby the tilting forces applied to the building structure are absorbed by a plurality of radially extending stabilising members (2) equally disposed around the central base (1, 6) of the foundation and protruding outwards from the central portion (1) in a horizontal level from which the forces are transferred into the ground by anchoring means (3) on the stabilising members (2).

9. A method according to claim 8, whereby the foundation also is anchored to the ground by downwardly protruding anchoring rods (4, 5) at each of the stabilising members (2) where the length of said anchoring rods (4, 5) have been individually selected according to the type of ground and the load to be mounted on the foundation.
